(19) Europäisches Patentamt
European Patent Office
Office européen des brevets

(11) **EP 4 555 902 B1**

(12) **EUROPEAN PATENT SPECIFICATION**

(45) Date of publication and mention
of the grant of the patent:
**29.07.2026 Bulletin 2026/31**

(21) Application number: **23877271.9**

(22) Date of filing: **10.10.2023**

(51) International Patent Classification (IPC):
*A47C 27/14* (2006.01)   *B29C 39/24* (2006.01)
*B29C 44/00* (2006.01)   *B29C 44/36* (2006.01)
*B60N 2/90* (2018.01)   *C08G 18/00* (2006.01)
*C08G 18/10* (2006.01)   *C08G 18/48* (2006.01)
*C08G 18/79* (2006.01)   *C08G 101/00* (2006.01)
*B60N 2/70* (2006.01)   *C08G 18/20* (2006.01)
*C08G 18/32* (2006.01)   *C08G 18/66* (2006.01)
*C08G 18/76* (2006.01)

(52) Cooperative Patent Classification (CPC):
**C08G 18/2063; B60N 2/70; C08G 18/3203;**
**C08G 18/4808; C08G 18/4812; C08G 18/4837;**
**C08G 18/6674; C08G 18/7664; C08G 18/797;**
B29C 44/28; B29C 44/42; B29C 44/46;
B29K 2075/00; B29L 2031/58; B29L 2031/771;
(Cont.)

(86) International application number:
**PCT/JP2023/036683**

(87) International publication number:
**WO 2024/080268 (18.04.2024 Gazette 2024/16)**

(54) **SEAT PAD**

SITZPOLSTER

REMBOURRAGE DE SIÈGE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **13.10.2022 JP 2022165099**
**14.02.2023 JP 2023020616**

(43) Date of publication of application:
**21.05.2025 Bulletin 2025/21**

(73) Proprietor: **Inoac Corporation**
**Nagoya-shi, Aichi 450-0003 (JP)**

(72) Inventors:
• **IMAI, Keita**
**Anjo-shi, Aichi 446-8504 (JP)**
• **KONDO, Satoshi**
**Anjo-shi, Aichi 446-8504 (JP)**
• **MIKUNI, Takumi**
**Anjo-shi, Aichi 446-8504 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
WO-A1-2018/111806      JP-A- 2008 539 314
JP-A- 2019 194 321      US-A1- 2006 084 777
US-B2- 6 919 384      US-B2- 7 790 778

(52) Cooperative Patent Classification (CPC): (Cont.)
C08G 2110/0008; C08G 2110/0058;
C08G 2110/0083; C08G 2350/00

**Description**

FIELD OF THE INVENTION

The present invention relates to a seat pad, and more particularly to a seat pad including a polyurethane foam having a small deflection coefficient and a high displacement rate.

BACKGROUND OF THE INVENTION

Seats for an automobile are classified into a type in which a seat cushion (seat surface portion) and a seat back (back surface portion) are separated from each other and a type in which they are integrated with each other.
Further, the seat for an automobile generally includes:

(a) a seat pad for receiving a load of an occupant when the occupant sits;
(b) a frame for supporting a seat pad; and
(c) a trim cover covering an outer surface of the seat pad.

A polyurethane foam is generally used in the seat pad.
When an occupant sits on a seat for an automobile including a seat pad, the seat pad is compressed in a load direction in proportion to a magnitude of a load applied to the seat pad. The magnitude of the load applied to the seat pad varies depending on the shape of the seat for an automobile, the inclination of the seat back, the part of the human body in contact with the seat for an automobile, the posture of the occupant, the uneven state of the road surface on which the automobile travels, and the like. Therefore, inappropriate deflection coefficient and deflection amount (or displacement rate) of the seat pad may result in a seat having poor seating comfort.
In order to solve this problem, various proposals have conventionally been made.
For example, Patent Literature 1 discloses a soft polyurethane foam for an automobile seat, which is obtained by reacting a raw material containing:

(a) 60 parts by mass of a polyol A obtained by reacting an ethylene oxide/propylene oxide mixture containing 8 mass% of ethylene oxide with a compound (initiator 1) having a hydroxyl value of 168 mgKOH/g and obtained by adding propylene oxide to glycerin;
(b) 40 parts by mass of a polyol K in which polymer particles are dispersed in a polyol G5 obtained by reacting propylene oxide with the initiator 1; and
(c) TDI-80 (NOC content: 44.8 mass%) in an amount corresponding to an isocyanate index of 105.

Patent Literature 1 describes that:

(A) such a method provides a soft polyurethane foam having an X value (= static spring constant at load of 883 N/static spring constant at load of 98 N) of 2.94; and
(B) when such a soft polyurethane foam is applied to a seat for an automobile, the bottom touch feeling after sitting down is eliminated.

Patent Literature 2 discloses a seat pad including:

a cushion body constituting a seating portion; and
a low air permeable foam integrally provided on a bottom surface of the cushion body.

Patent Literature 2 describes that when the low air permeable foam is integrally provided on the bottom surface of the cushion body, vibration that deteriorates riding comfort can be absorbed.
Patent Literature 3 discloses a polyurethane foam obtained by reacting a raw material containing:

(a) 90 parts by weight of a polyether polyol having a number average molecular weight of 7000, an average number of functional groups of 3, and a hydroxyl value of 26 mgKOH/g;
(b) 10 parts by weight of a polymer polyol having a number average molecular weight of 5000, an average number of functional groups of 3, a hydroxyl value of 25 mgKOH/g, and a solid content of 30%;
(c) 0.5 parts by weight of a linear silicone-based foam stabilizer having a viscosity of 7280 mPa·s (25°C) and a surface tension of 20.08 mN/m (25°C); and
(d) a mixture of TDI (80 wt.%) and MDI (20 wt.%) (NCO = 44.8%) in an amount corresponding to an isocyanate index of 100.

Patent Literature 3 describes that such a method can provide a polyurethane foam that is less likely to cause bottoming even when it is thinner than a conventional one and has high air permeability.

Patent Literature 4 discloses a deformation analysis technique of simulating a non-linear viscoelastic behavior of a compressible material that is not a seat pad but has a non-linear viscoelastic behavior.

Patent Literature 4 describes that when a model including, in parallel, a linear viscoelastic portion according to a generalized Maxwell model and a compressible elastoplastic portion having a yield conditional expression depending on hydrostatic stress is used, the damping behavior when a urethane foam is slowly pushed can be analyzed with high accuracy.

Patent Literature 5 discloses a seat for an automobile obtained by

(a) disposing a net member having a three-dimensional structure in a die and foaming polyurethane in the die, thereby molding a seat back portion in which the net member having a three-dimensional structure is incorporated in a cushion material made of a polyurethane foam, and

(b) fixing the net member onto a frame in a state where tension is applied to the net member protruding to both side portions of the seat back portion.

Patent Literature 5 describes that

(A) such a method provides a seat back portion in which a net member having a three-dimensional structure is integrally incorporated in a cushion material made of a polyurethane foam, and

(B) the portion of the net member impregnated with the polyurethane has high surface rigidity, so that impact can be damped when the impact is applied from the rear of an occupant.

The hardness and elasticity of the seat pad affect the seating comfort at the time of sitting. In order to further increase the cushioning feeling, the seat pad is more greatly deflected in a high load range, i.e., preferably has a small deflection coefficient. In addition, in order to reduce the bottom touch feeling at the time of sitting, a high displacement rate is preferable. However, there is no conventional example in which a seat pad achieving both a small deflection coefficient and a high displacement rate has been proposed.

Patent Literatures 6 and 7 are also dealing with seat pads comprising a polyurethane foam.

[CITATION LIST]

[PATENT LITERATURE]

[Patent Literature 1] JP 2003-119240 A
[Patent Literature 2] JP 2005-177171 A
[Patent Literature 3] JP 2019-194321 A
[Patent Literature 4] JP 2020-094980 A
[Patent Literature 5] JP 2002-102008 A
[Patent Literature 6] US 6,919,384 B2
[Patent Literature 7] US 7,790,778 B2

SUMMARY OF THE INVENTION

An object of the present invention is to provide a seat pad composed of a polyurethane foam and having a small deflection coefficient and a high displacement rate.

In order to achieve the objects, a seat pad according to claim 1 is provided.

In the case of manufacturing a polyurethane foam, the use of a raw material mixture containing the polyether polyol A which satisfies predetermined conditions and the carbodiimide-modified MDI provides a polyurethane foam having a deflection coefficient of 2.8 or less and a displacement rate of 30% or more.

It is considered that the deflection coefficient is 2.8 or less because the use of the polyether polyol A having a high EO content rate relatively decreases the number of side chains contained in a polymer chain, resulting in less entanglement between the polymer chains, and because the molecular chain is thus likely to be expanded/contracted, thereby imparting elasticity to the polyurethane foam.

It is considered that the displacement rate is 30% or more due to the use of the polyether polyol A having a large weight average molecular weight.

BRIEF DESCRIPTION OF THE DRAWINGS

FIG. 1 is a schematic diagram of a damping tester;
FIG. 2 is FS curves of polyurethane foams obtained in Examples 1 to 4 and Comparative Examples 1 and 2;
FIG. 3 is results of a damping test of the polyurethane foams (thickness: 100 mm) obtained in Examples 1 to 4 and Comparative Examples 1 and 2; and
FIG. 4 is results of a damping test of the polyurethane foams (thickness: 50 mm) obtained in Examples 1 to 4 and Comparative Examples 1 and 2.

DETAILED DESCRIPTION OF PREFERRED EMBODIMENTS

Hereinafter, embodiments of the present invention will be described in detail.

[1. Seat pad]

The seat pad according to the present invention is composed of a polyurethane foam obtained by reacting a raw material mixture containing a polyol component and a polyisocyanate component. Usually, the raw material mixture further contains a crosslinking agent, a foaming agent, and a catalyst.

[1.1. Polyurethane foam]

The polyurethane foam constituting the seat pad is obtained by foaming and reacting a raw material mixture satisfying predetermined conditions. Details of a method for manufacturing the polyurethane foam will be described later.

[1.2. Characteristics]

[1.2.1. Deflection coefficient]

The "deflection coefficient" refers to a value as measured in accordance with JIS K 6400-2:2012. Specifically, the "deflection coefficient" refers to a value (= $F_{65\%}/F_{25\%}$) obtained by dividing a force ($F_{65\%}$) at 65% compression by a force ($F_{25\%}$) at 25% compression when compression is performed, at a constant speed, up to 75% after 75% preliminary compression.

As will be described later, the polyurethane foam according to the present invention uses a polyether polyol A having a high EO content rate as one of raw materials. The use of the polyether polyol A having a high EO content rate relatively decreases the deflection coefficient of the polyurethane foam. This is considered to be because the use of the polyether polyol A having a high EO content rate relatively decreases the number of side chains contained in a polymer chain, resulting in less entanglement between the polymer chains, and because the molecular chain is thus likely to be expanded/contracted, thereby imparting elasticity to the polyurethane foam. In general, as the deflection coefficient is smaller, the polyurethane foam is more greatly deflected in a high load range, so that the cushioning feeling is increased.

In order to increase the cushioning feeling, the deflection coefficient of the polyurethane foam needs to be 2.8 or less. When the manufacturing conditions are optimized, the deflection coefficient is 2.7 or less, 2.6 or less, or 2.5 or less.

On the other hand, too small a deflection coefficient may excessively increase the deflection amount, resulting in large bottom touch feeling. Therefore, the deflection coefficient is preferably 2.0 or more. The deflection coefficient is more preferably 2.1 or more, or 2.2 or more.

[1.2.2. Displacement rate]

The "displacement rate" refers to a value represented by the following equation (1).

$$\text{Displacement rate} = t_1 \times 100/t_0 \quad \ldots \ (1)$$

where

$t_0$ is a thickness of a flat plate sample cut out from the polyurethane foam, and
$t_1$ is a maximum value of a displacement amount (sinking amount) of an iron plate when a damping characteristic is measured in accordance with JASO B408 using the flat plate sample.

Strictly speaking, the displacement rate depends on the thickness $t_0$ of the flat plate sample. For the polyurethane foam according to the present invention, when a plurality of displacement rates are measured using a plurality of flat plate samples having different thicknesses $t_0$, at least one displacement rate has only to satisfy the following condition.
In general, as the displacement rate is larger, the cushioning property at the time of sitting increases. In order to obtain such an effect, the displacement rate needs to be 30% or more. The displacement rate is preferably 35% or more, 40% or more, 45% or more, 50% or more, or 55% or more.
In the polyurethane foam according to the present invention, when the manufacturing conditions are optimized, the displacement rate when $t_0$ = 50 mm is 45% or more. When the manufacturing conditions are further optimized, the displacement rate when $t_0$ = 50 mm is 55%, 60% or more, or 65% or more.
Similarly, in the polyurethane foam according to the present invention, when the manufacturing conditions are optimized, the displacement rate when $t_0$ = 100 mm is 50% or more. When the manufacturing conditions are further optimized, the displacement rate when $t_0$ = 100 mm is 55% or more.

[2. Method for manufacturing polyurethane foam]

The polyurethane foam constituting the seat pad is obtained by

(a) preparing a raw material mixture containing a polyol component and a polyisocyanate component; and
(b) reacting the raw material mixture.

Usually, the raw material mixture further contains a crosslinking agent, a foaming agent, and a catalyst.

[2.1. Main raw material]

[2.1.1. Polyol component]

The polyol component is one of the main raw materials for the polyurethane foam.
In the present invention, the polyol component contains a polyether polyol A having

(a) an EO content rate of 50 mol% or more,
(b) a number of functional groups of 2.0 or more and 3.0 or less, and
(c) a weight average molecular weight of more than 3500.

The polyol component may contain one kind of polyether polyol A satisfying such conditions, or may contain two or more kinds of polyether polyols A satisfying such conditions.
The polyol component further contains a polyether polyol B having

(a) an EO content rate of 30 mol% or less, and
(b) a number of functional groups of 2.0 or more.

The polyol component may contain one kind of polyether polyol B satisfying such conditions, or may contain two or more kinds of polyether polyols B satisfying such conditions.

[A. Polyether polyol A]

[A.1. EO content rate]

The "EO content rate (mol%)" of the polyether polyol A refers to a proportion of the number of moles of an ethylene oxide (EO) unit to the total number of moles of alkylene oxide units contained in the polyether polyol A.
The polyether polyol A may contain an alkylene oxide unit other than the EO unit. In this case, the kind of alkylene oxide unit other than the EO unit is not particularly limited, but is preferably a propylene oxide (PO) unit.
The EO content rate of the polyether polyol A mainly affects the deflection coefficient. In general, as the EO content rate of the polyether polyol A is higher, the deflection coefficient decreases. This is considered to be because, as the EO content rate is higher, the number of side chains ($-CH_3$) contained in a polymer chain relatively decreases, resulting in less entanglement between the polymer chains, and because the molecular chain is thus likely to be expanded/contracted, thereby imparting elasticity to the polyurethane foam.

In order to obtain such an effect, the EO content rate of the polyether polyol A is 50.0 mol% or more. The EO content rate is preferably 60.0 mol% or more, 70.0 mol% or more, 80.0 mol% or more, or 90.0 mol% or more. The EO content rate of the polyether polyol A may be 100.0 mol%.

[A.2. Number of functional groups]

The number of functional groups of the polyether polyol A affects the deflection coefficient. In general, as the number of functional groups of the polyether polyol A is larger, the rigidity of the polyurethane foam increases, and the compressive residual strain decreases. In order to obtain such an effect, the number of functional groups of the polyether polyol A is 2.0 or more. The number of functional groups is preferably 2.1 or more, or 2.2 or more.

On the other hand, an excessive number of functional groups of the polyether polyol A may excessively increase the hardness of the polyurethane foam and increase the deflection coefficient. Therefore, the number of functional groups of the polyether polyol A is 3.0 or less. The number of functional groups is preferably 2.9 or less, or 2.8 or less.

[A.3. Weight average molecular weight]

As the weight average molecular weight of the polyether polyol A is larger, the hardness of the polyurethane foam decreases and the polyurethane foam is likely to be deflected. In order to obtain such an effect, the weight average molecular weight of the polyether polyol A is more than 3500. The weight average molecular weight is preferably 4000 or more, or 500C or more.

On the other hand, too large a weight average molecular weight of the polyether polyol A may excessively increase the viscosity of the raw material mixture, leading to deterioration in manufacturability. In addition, the reactivity of the raw material mixture may be reduced, and the tear strength of the polyurethane foam may be reduced. Therefore, the weight average molecular weight is preferably 12000 or less. The weight average molecular weight is more preferably 10000 or less, or 8000 or less.

[A.4. Hydroxyl value]

Too large a hydroxyl value of the polyether polyol A may deteriorate seating comfort of a seat pad. Therefore, the hydroxyl value is preferably 70 mgKOH/g or less. The hydroxyl value is more preferably 60 mgKOH/g or less, or 55 mgKOH/g or less.

On the other hand, too small a hydroxyl value of the polyether polyol A may excessively harden the polyurethane foam, thereby making it impossible to maintain good seating comfort when the polyurethane foam is used as a seat pad. Therefore, the hydroxyl value is preferably 10 mgKOH/g or more. The hydroxyl value is more preferably 15 mgKOH/g or more, or 20 mgKOH/g or more.

[B. Polyether polyol B]

[B.1. EO content rate]

The "EO content rate (mol%)" of the polyether polyol B refers to a proportion of the number of moles of an ethylene oxide (EO) unit to the total number of moles of alkylene oxide units contained in the polyether polyol B.

The polyether polyol B may contain an alkylene oxide unit other than the EO unit. In this case, the kind of alkylene oxide unit other than the EO unit is not particularly limited, but is preferably a propylene oxide (PO) unit.

Too high an EO content rate of the polyether polyol B may reduce the reactivity of the raw material mixture. In addition, the foam state and the air permeability of the foam may deteriorate. Therefore, the EO content rate is 30 mol% or less. The EO content rate is preferably 20 mol% or less, 10 mol% or less, or 5 mol% or less. The EO content rate may be zero.

[B.2. Number of functional groups]

The number of functional groups of the polyether polyol B has only to be 2.0 or more.

However, too large the number of functional groups of the polyether polyol B may reduce elongation of the polyurethane foam. Therefore, the number of functional groups is preferably 4.0 or less. The number of functional groups is more preferably 3.8 or less, or 3.6 or less.

[B.3. Weight average molecular weight]

The weight average molecular weight of the polyether polyol B is not particularly limited, and an optimum value can be selected according to the purpose. In general, too small a weight average molecular weight of the polyether polyol B may impair the elongation percentage and flexibility of the polyurethane foam. Therefore, the weight average molecular weight is preferably 1000 or more. The weight average molecular weight is more preferably 2000 or more, or 3000 or more.
On the other hand, too large a weight average molecular weight of the polyether polyol B may excessively increase the viscosity of the raw material mixture, leading to deterioration in manufacturability. Therefore, the weight average molecular weight is preferably 12000 or less. The weight average molecular weight is more preferably 10000 or less, or 8000 or less.

[2.1.2. Polyisocyanate component]

The polyisocyanate component is the other one of the main raw materials for the polyurethane foam.
In the present invention, the polyisocyanate component contains at least carbodiimide-modified MDI. The polyisocyanate component may contain only carbodiimide-modified MDI, or may further contain a polyisocyanate (hereinafter, this is also referred to as "polyisocyanate B") other than the carbodiimide-modified MDI.

[A. Carbodiimide-modified MDI]

The carbodiimide (-N=C=N-)-modified MDI is composed of a product produced by condensation, with $CO_2$ generation, between -NCO groups of diphenylmethane diisocyanate (MDI) in the presence of a catalyst.
The use of the carbodiimide-modified MDI as the polyisocyanate component increases the elasticity of the polyurethane foam, resulting in an increased amount of deflection in a high load range.

[B. Polyisocyanate B]

In the present invention, the type of polyisocyanate B is not particularly limited, and an optimum polyisocyanate B can be selected according to the purpose.
Specific examples of the polyisocyanate B include bifunctional aromatic isocyanates, bifunctional alicyclic isocyanates, bifunctional aliphatic isocyanates, and isocyanates having a number of functional groups of more than 2. The raw material mixture may contain any one of these polyisocyanates B, or may contain two or more thereof.
Examples of the bifunctional aromatic isocyanate include

2,4-tolylene diisocyanate, 2,6-tolylene diisocyanate,
m-phenylene diisocyanate, p-phenylene diisocyanate,
4,4'-diphenylmethane diisocyanate (4,4'-MDI),
2,4'-diphenylmethane diisocyanate (2,4'-MDI),
2,2'-diphenylmethane diisocyanate (2,2'-MDI),
xylylene diisocyanate,
3,3'-dimethyl-4,4'-biphenylene diisocyanate, and
3,3'-dimethoxy-4,4'-biphenylene diisocyanate, and a mixture thereof may be used.

Examples of the bifunctional alicyclic isocyanate include

cyclohexane-1,4-diisocyanate, isophorone diisocyanate,
dicyclohexylmethane-4,4'-diisocyanate, and
methylcyclohexane diisocyanate.

Examples of the bifunctional aliphatic isocyanate include

butane-1,4-diisocyanate, hexamethylene diisocyanate,
isopropylene diisocyanate, methylene diisocyanate, and lysine isocyanate. Examples of the bi- or higher functional isocyanate include polymeric MDI and tri- or higher functional isocyanate.

Examples of the isocyanate having a number of functional groups of more than 2 include

1-methylbenzol-2,4,6-triisocyanate,

1,3,5-trimethylbenzol-2,4,6-triisocyanate, biphenyl-2,4,4'-triisocyanate, diphenylmethane-2,4,4'-triisocyanate, methyldiphenylmethane-4, 6,4'-triisocyanate, 4,4'-dimethyldiphenylmethane-2,2',5,5'tetraisocyanate, and triphenylmethane-4,4',4"-triisocyanate.

[C. NCO group content rate (NCO%)]

The "NCO group content rate (NCO%)" refers to a proportion of the mass of NCO groups to a total mass of the polyisocyanate component.

The NCO% of the polyisocyanate component is preferably less than 35%, more preferably less than 30%, and still more preferably 29.5% or less.

[2.1.3. Crosslinking agent]

The raw material mixture may contain a crosslinking agent. The crosslinking agent is preferably a compound having a number of functional groups of at least 3 or more and containing a functional group having an active hydrogen atom (for example, a hydroxyl group, an amino group) The crosslinking agent may be composed only of a compound having a number of functional groups of 3 or more, or may further contain a compound having a number of functional groups of 2 in addition to the compound having a number of functional groups of 3 or more.

The number of functional groups of the crosslinking agent affects the compressive residual strain. In order to obtain a polyurethane foam having a small compressive residual strain, the number of functional groups of the crosslinking agent is preferably 3 or more.

On the other hand, an excessively large number of functional groups of the crosslinking agent may excessively increase the hardness of the polyurethane foam. Therefore, the number of functional groups of the crosslinking agent is preferably 6 or less.

The molecular weight of the crosslinking agent is not particularly limited, and an optimum value can be selected according to the purpose. The molecular weight of the crosslinking agent is preferably 1000 or less, 700 or less, or 500 or less.

The molecular weight of the crosslinking agent is preferably 60 or more, 90 or more, or 120 or more.

Examples of the crosslinking agent include glycerin, diethanolamine (DEA), and polyfunctional polyol.

The raw material mixture may contain any one of these crosslinking agents, or may contain two or more thereof.

[2.1.4. Foaming agent]

The "foaming agent" refers to an additive for generating bubbles in the raw material mixture in the process of resinizing the liquid raw material mixture.

In the present invention, the foaming agent may be either

(a) a physical foaming agent that generates a gas by pressure reduction or heating; or
(b) a chemical foaming agent that generates a gas by thermal decomposition or chemical reaction.

Examples of the physical foaming agent include

(a) hydrocarbons such as cyclopentane, isopentane, and normal pentane, and
(b) halogen-based compounds such as methylene chloride, trichlorofluoromethane, dichlorodifluoromethane, nonafluorobutyl methyl ether, pentafluoroethyl methyl ether, and pentafluoroisopropyl methyl ether.

Examples of the chemical foaming agent include

(a) water that reacts with an isocyanate group to generate $CO_2$, and
(b) azodicarbonamide that generates nitrogen, carbon monoxide, carbon dioxide, or ammonia gas by thermal decomposition.

The raw material mixture may contain any one of these foaming agents, or may contain two or more thereof.

Among them, the foaming agent is preferably water. When water is used as the foaming agent, $CO_2$ gas generated by reaction between water and an isocyanate group promotes foaming. The heat of reaction between water and an isocyanate group accelerates curing of the resin.

[2.1.5. Catalyst]

The "catalyst" refers to a catalyst having a large action of accelerating the resinification reaction and/or a catalyst having a large action of accelerating the foaming reaction.

When a chemical foaming agent (water) is not used as the foaming agent, it is preferable to use a catalyst having a large action of accelerating the resinification reaction.

Examples of the catalyst include an amine-based catalyst and a metal catalyst. The amine-based catalyst is a catalyst having a large action of accelerating both the resinification reaction and the foaming reaction. The metal catalyst is a catalyst having a large action of accelerating the resinification reaction. The raw material mixture may contain any one of these catalysts, or may contain two or more thereof.

Examples of the amine-based catalyst include

N,N-dimethylcyclohexylamine, N,N-dimethylbenzylamine,
N,N-dimethylaminoethanol,
N,N',N'-trimethylaminoethylpiperazine, and triethylenediamine.

Examples of the metal catalyst include

(a) tin catalysts such as stannous octoate and dibutyltin dilaurate,
(b) mercury catalysts such as phenylmercuric propionate, and
(c) lead catalysts such as lead octenate.

[2.2. Sub-raw material]

The raw material mixture may further contain one or more of the following sub-raw materials in addition to the main raw materials described above. Specific examples of the sub-raw material are as follows.

[2.2.1. Foam stabilizer]

The "foam stabilizer" refers to an additive having an action of uniformizing the size and distribution of bubbles.

The addition of the foam stabilizer to the raw material mixture can provide a polyurethane foam having bubbles uniform in size and distribution. Examples of the foam stabilizer include silicone-based foam stabilizers, fluorine-containing compound-based foam stabilizers, and known surfactants.

[2.2.2. Flame retardant]

The "flame retardant" refers to an additive having an action of making the polyurethane foam flame-retardant.

Examples of the flame retardant include halogen-based flame retardants, phosphorus-based flame retardants, metal hydroxide-based flame retardants, and antimony-based flame retardants.

[2.3. Blending amount and content]

[2.3.1. Blending amount and content of main raw material]

[A. Blending amount of polyether polyol A]

The "blending amount (parts by mass) of the polyether polyol A" refers to a total mass of the polyether polyol A in the polyol component when the total mass of the polyol component is 100.

In general, as the blending amount of the polyether polyol A is larger, the deflection coefficient of the polyurethane foam decreases. In order to obtain such an effect, the blending amount of the polyether polyol A is preferably 50 parts by mass or more. The blending amount is more preferably 60 parts by mass or more, or 70 parts by mass or more.

However, an excessive blending amount of the polyether polyol A may deteriorate moldability of the foam. Therefore, the blending amount of the polyether polyol A is preferably 90 parts by mass or less.

[B. Content of carbodiimide-modified MDI]

The "content (mass%) of the carbodiimide-modified MDI" refers to a proportion of the mass of the carbodiimide-modified MDI to the total mass of the polyisocyanate component.

In general, as the content of the carbodiimide-modified MDI is higher, the deflection coefficient of the polyurethane foam decreases and the displacement rate increases. In order to obtain such an effect, the content of the carbodiimide-modified MDI is 50 mass% or more. The content is preferably 60 mass% or more, or 70 mass% or more.

The content of the carbodiimide-modified MDI may be 100 mass%. The content of the carbodiimide-modified MDI is preferably 90 mass% or less, or 80 mass% or less.

An NCO content rate of the carbodiimide-modified MDI is preferably 40% or less, 35% or less, or 32% or less, and particularly preferably 30% or less. The NCO content rate is preferably 15% or more, 20% or more, 25% or more, or 27% or more.

[C. Blending amount of crosslinking agent]

The "blending amount (parts by mass) of the crosslinking agent" refers to a mass of the crosslinking agent when the total mass of the polyol components is 100.

In general, as the blending amount of the crosslinking agent is higher, the compressive residual strain of the polyurethane foam decreases. In order to obtain such an effect, the blending amount of the crosslinking agent is preferably more than 0 parts by mass. The blending amount is more preferably 1 part by mass or more, or 2 parts by mass or more.

On the other hand, an excessive blending amount of the crosslinking agent may excessively increase the hardness of the polyurethane foam. Therefore, the blending amount of the crosslinking agent is preferably 10 parts by mass or less. The blending amount is more preferably 8 parts by mass or less, or 6 parts by mass or less.

[D. Blending amount of polyether polyol B]

The "blending amount (parts by mass) of the polyether polyol B" refers to a mass of the polyether polyol B in the polyol component when the total mass of the polyol component is 100.

In general, an excessive blending amount of the polyether polyol B relatively decreases the blending amount of the polyether polyol A. As a result, the deflection coefficient of the polyurethane foam may increase, or the displacement rate may decrease. Therefore, the blending amount of the polyether polyol B is preferably less than 50 parts by mass. The blending amount is more preferably 40 parts by mass or less, or 30 parts by mass or less.

[E. Isocyanate index]

The "isocyanate index" refers to a value obtained by multiplying a ratio of an equivalent of an isocyanate group of the polyisocyanate in the raw material mixture to an equivalent of an active hydrogen group in the raw material mixture by 100.

In the present invention, the isocyanate index is not particularly limited, and an optimum value can be selected according to the purpose. In general, as the isocyanate index is larger, the compressive residual strain decreases. In order to obtain such an effect, the isocyanate index is preferably 90 or more. The isocyanate index is more preferably 95 or more.

On the other hand, too large an isocyanate index may excessively increase the hardness of the polyurethane foam. Therefore, the isocyanate index is preferably 115 or less.

[2.3.2. Blending amount of sub-raw material]

In the present invention, the blending amount of the sub-raw material is not particularly limited, and an optimum content can be selected according to the purpose.

[2.4. Reaction of raw material mixture]

As the foaming in the method for producing a polyurethane foam according to the present invention, either slab foaming or mold foaming can be employed.

The slab foaming is a method in which a composition for producing a polyurethane foam (raw materials for a polyurethane foam) is mixed, discharged onto a belt conveyor, and foamed at normal temperature under atmospheric pressure.

On the other hand, the mold foaming is a method in which raw materials for producing a polyurethane foam (raw materials for a polyurethane foam) are mixed and injected into a cavity of a mold (die), and foamed into a cavity shape. The mold foaming is preferable in that a polyurethane foam having a shape close to the shape of the seat pad is obtained.

In the case of mold molding, the polyisocyanate preferably has a low viscosity, and, for example, a prepolymer type polyisocyanate is not preferable.

[3. Effects]

In the case of manufacturing a polyurethane foam, the use of a raw material mixture containing the polyether polyol A which satisfies predetermined conditions and the carbodiimide-modified MDI provides a polyurethane foam having a deflection coefficient of 2.8 or less and a displacement rate of 30% or more.

When such a polyurethane foam is used as a seat pad, the seat pad has an excellent deflection coefficient even when it is thin (for example, 50 mm or less), and has an excellent deflection amount (displacement rate) in a damping characteristic.

It is considered that the deflection coefficient is 2.8 or less because the use of the polyether polyol A having a high EO content rate relatively decreases the number of side chains contained in a polymer chain, resulting in less entanglement between the polymer chains, and because the molecular chain is thus likely to be expanded/contracted, thereby imparting elasticity to the polyurethane foam.

It is considered that the displacement rate is 30% or more due to the use of the polyether polyol A having a large weight average molecular weight.

[Examples]

(Examples 1 to 4 and Comparative Examples 1 and 2)

[1. Preparation of sample]

A polyether polyol, a crosslinking agent, a foaming agent, a catalyst, and a foam stabilizer were blended at a predetermined ratio to obtain a mixed liquid (hereinafter, also referred to as "component A").

In addition, polymeric MDI, MDI (NCO content rate: 29%, carbodiimide-modified MDI content: 75 mass%) containing carbodiimide-modified MDI, and an MDI prepolymer (NCO content rate: 28.5%) were blended at a predetermined ratio to obtain a mixed liquid (hereinafter, also referred to as "component B").

Further, the component A and the component B were mixed so that the isocyanate index reached a predetermined value to obtain a raw material mixture. Table 1 shows the compositions of the component A and the component B.

Example 1 is an example in which only polyether polyol 2 (molecular weight: 4000, number of functional groups: 2, EO content rate: 80 mol%) was used as the polyether polyol A.

Examples 2 and 3 are examples in which a mixture of

(a) polyether polyol 2 (molecular weight: 4000, number of functional groups: 2, EO content rate: 80 mol%) and
(b) polyether polyol 3 (molecular weight: 5000, number of functional groups: 3, EO content rate: 80 mol%) was used as the polyether polyol A.

Example 4 is an example in which only polyether polyol 3 was used as the polyether polyol A.

[Table 1]

<Composition (parts by mass) of polyol-side component A>

| Raw material | Molecular weight | f | EO rate | OHV | Example 1 | Example 2 | Example 3 | Example 4 | Comparative Example 1 | Comparative Example 2 |
|---|---|---|---|---|---|---|---|---|---|---|
| Polyether polyol 1 | 4000 | 2 | 20 | 28 | 20 | 20 | 20 | 20 | | |
| Polyether polyol 2 | 4000 | 2 | 80 | 28 | 80 | 50 | 30 | | | |
| Polyether polyol 3 | 5000 | 3 | 80 | 35 | | 30 | 50 | 80 | | 3.4 |
| Polyether polyol 4 | 3500 | 3 | 75 | 51 | | | | | 70 | |
| Polyether polyol 5 | 5000 | 3 | 15 | 34 | | | | | 30 | 30 |
| Polyether polyol 6 | 7000 | 3 | 15 | 24 | | | | | | 30 |
| Polymer polyol | 5000 | 3 | 15 | 24 | | | | | | 40 |
| | | | | | | | | | | |
| | <Manufacturer, product name, etc.> | | | | | | | | | |
| Crosslinking agent 1 | Asahi Glass EL-980 polyfunctional polyol | | | | 3.0 | 3.0 | 3.0 | 3.0 | 3.0 | |
| | | | | | | | | | | |
| Foaming agent | Water | | | | 2.3 | 2.3 | 2.4 | 2.4 | 2.5 | 2.85 |
| Catalys | Evonik 33LSI | | | | 0.5 | 0. 5 | 0.5 | 0.6 | 0.8 | 0.8 |
| Silicone foam stabilizer 1 | Momentive L3184J | | | | 0.2 | | | | 0.5 | |
| Silicone foam stabilizer 2 | Evonik B8715 LF | | | | | 0.2 | 0.2 | 0.2 | | |
| Crosslinking agent 2 | NOF Glycerin | | | | | | | | | |
| Flame retardant | Daihachi Chemical CR5401 | | | | | | | | | |
| Silicone foam stabilizer 3 | Evonik B8738LF2 | | | | | | | | | 0.5 |
| Foaming catalyst 2 | Momentive BL - 19 | | | | | | | | | |
| Total | | | | | 106.0 | 106.0 | 106.1 | 106.2 | 106.8 | 107.6 |

EP 4 555 902 B1

<Composition (parts by mass) of isocyanate-side component B>

| | Example 1 | Example 2 | Example 3 | Example 4 | Comparative Example 1 | Comparative Example 2 |
|---|---|---|---|---|---|---|
| Isocyanate | | | | | | |
| Polymeric MDI | 5 | 5 | 5 | 5 | 5 | |
| MDI containing carbodiimide-modified MDI | 95 | 95 | 95 | 95 | 95 | |
| MDI prepolymer (NCO %: 28.5%) *1 | | | | | | 100 |
| Total of isocyanate-side component B | 100 | 100 | 100 | 100 | 100 | 100 |
| *1) Prepolymer of MDI (MDI mixture having a binuclear form ratio of 70% or more) and polyether polyol | | | | | | |

| | Example 1 | Example 2 | Example 3 | Example 4 | Comparative Example 1 | Comparative Example 2 |
|---|---|---|---|---|---|---|
| Index [-] | 105 | 106 | 103 | 105 | 105 | 95 |
| Use amount [g] of component B with respect to 100 g of component | 48.4 | 49.5 | 49.9 | 51.6 | 56.6 | 49.6 |

The obtained raw material mixture was injected into a die of 400 mm × 400 mm × 100 mm, and foamed and cured at a die temperature of about 60°C. The curing time was set to 5 minutes.

[2. Test method]

[2.1. Core density]

A skin layer was removed from the obtained foam to prepare a sample for core density measurement. The obtained sample was used to measure the core density in accordance with JIS K 7222.

[2.2. 25% Hardness]

The 25% hardness was measured in accordance with JIS K 6400-2 Method D.

[2.3. Hysteresis loss]

The hysteresis loss was measured in accordance with JIS K 6400-2 Method E.

[2.4. Deflection coefficient]

The deflection coefficient was measured in accordance with JIS K 6400-2 Method E. The deflection coefficient was determined by dividing 65% compressive load by 25% compressive load.

[2.5. Stress relaxation]

The stress relaxation was determined in accordance with JIS K 6400-4. The load was set to 196 N, and the pressurization time was set to 5 minutes.

[2.6. Damping characteristic]

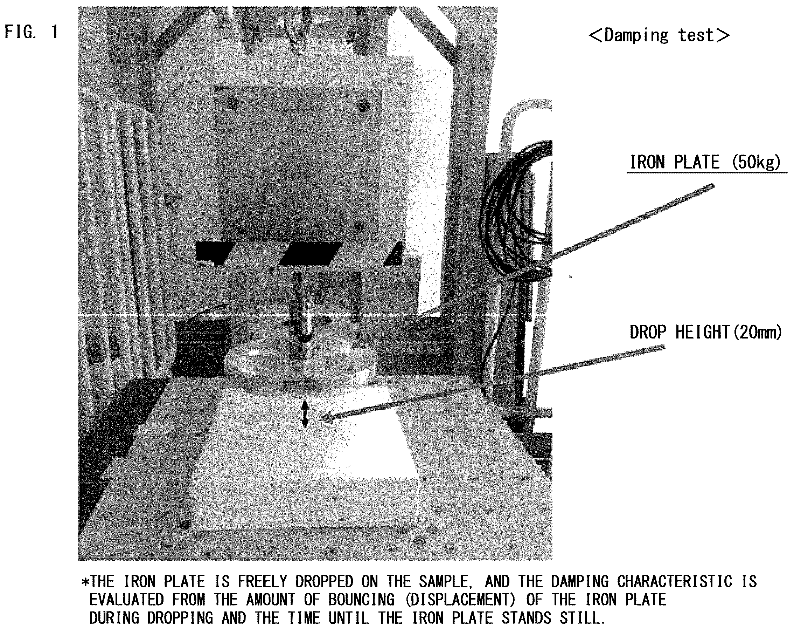

FIG. 1 shows a schematic diagram of a damping tester. An iron plate having a mass of 50 kg was disposed at a position 20 mm above the sample. From that position, the iron plate was freely dropped towards the sample. A vibration characteristic of the sample was evaluated from the displacement of the iron plate after dropping and the time until the vibration stopped.

[3. Results]

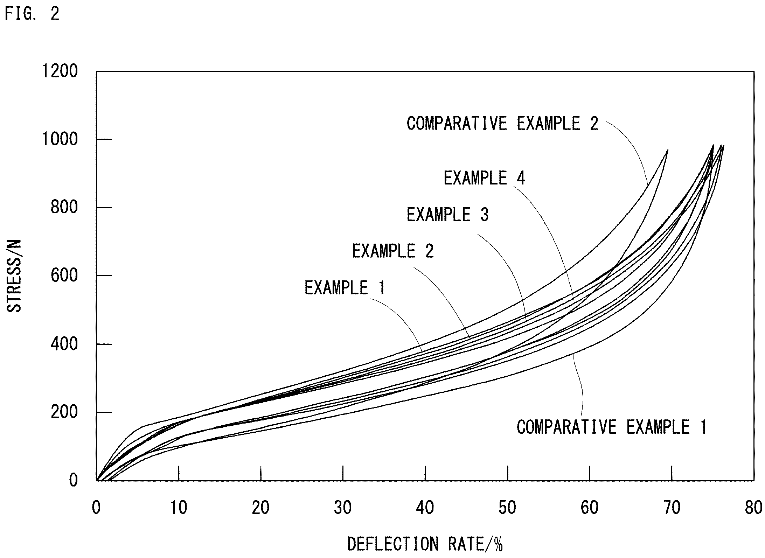

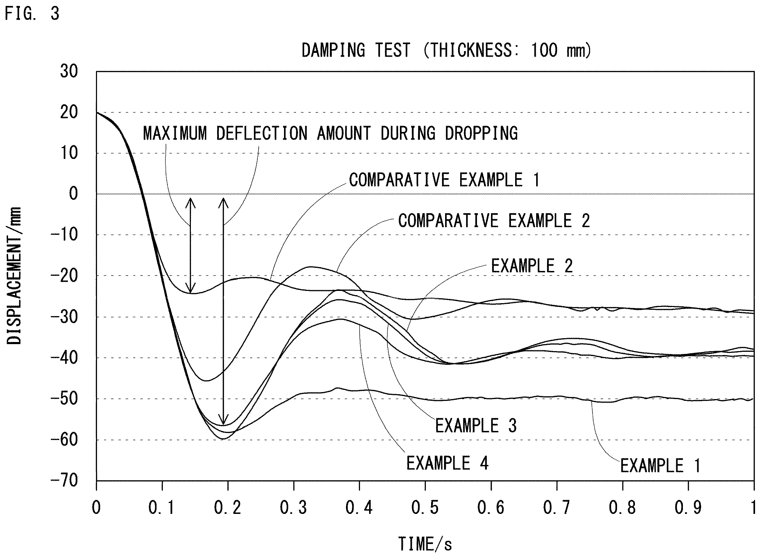

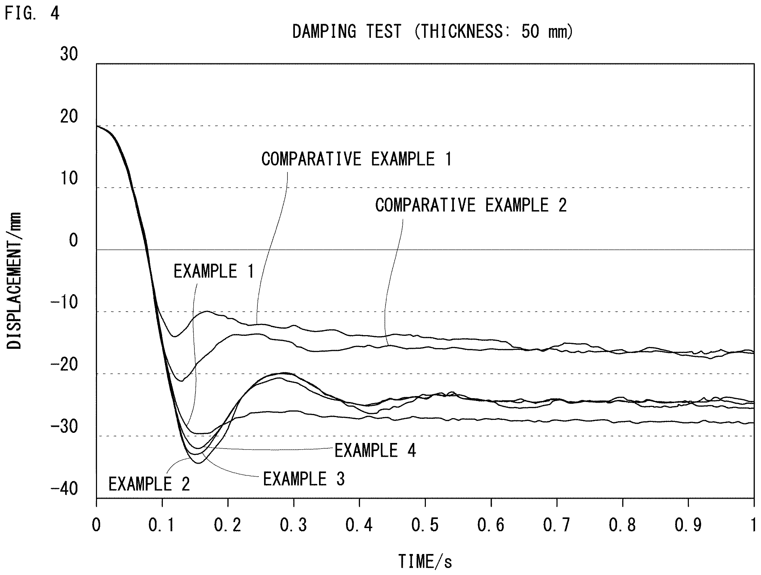

The results are shown in Table 2. Table 2 also shows the test piece size and the evaluation test method of each physical property value. FIG. 2 shows FS curves of polyurethane foams obtained in Examples 1 to 4 and Comparative Examples 1 and 2. FIG. 3 shows results of a damping test of the polyurethane foams (thickness: 100 mm) obtained in Examples 1 to 4 and Comparative Examples 1 and 2. FIG. 4 shows results of a damping test of the polyurethane foams (thickness: 50 mm) obtained in Examples 1 to 4 and Comparative Examples 1 and 2. The following matters are seen from Table 2 and FIGS. 2 to 4.

(1) Comparative Example 1 showed both a displacement rate at $t_0 = 50$ mm and a displacement rate at $t_0 = 100$ mm of less than 30%. This is considered to be because the polyether polyol A having a weight average molecular weight of more than 3500 is not contained.
(2) Comparative Example 2 showed a high displacement rate but a deflection coefficient of more than 2.8. This is considered to be because the content of the polyether polyol A is excessively low.
(3) All of Examples 1 to 4 showed a deflection coefficient of 2.8 or less. In addition, regardless of the thickness $t_0$ of the sample, the displacement rate was 50% or more in all Examples.

[Table 2]

| Test item | | | Unit | Example 1 | Example 2 | Example 3 | Example 4 | Comparative Example 1 | Comparative Example 2 |
|---|---|---|---|---|---|---|---|---|---|
| Test piece size (length × width × thickness) | | | mm | 400×400×10-0 | 400×400x100 | 400×400×10-0 | 400×400×10-0 | 400×400×100 | 400×400×100 |
| Core density | | | kg/m$^3$ | 64.8 | 64.6 | 65.0 | 64.8 | 64.8 | 60.1 |
| 25% Hardness | | | N | 257 | 256 | 251 | 244 | 227 | 255 |
| Hysteresis loss | | | % | 16.8 | 16.7 | 17.5 | 18.3 | 27.7 | 26.5 |
| Deflection coefficient | | | - | 2.44 | 2.50 | 2.54 | 2.53 | 2.41 | 2.83 |
| Stress relaxation | | | % | 7.4 | 7.7 | 8.2 | 11.1 | 16.3 | 14.4 |
| Damping characteristi | Evaluation item | Thickness | | | | | | | |
| | Displacement amount during dropping | 100mm | mm | -58.0 | -59.3 | -59.4 | -56.5 | -23.9 | -45.6 |
| | | 50mm | mm | -29.9 | -34.6 | -33.1 | -32.2 | -14.2 | -21.4 |
| | Displacement rate during dropping | 100mm | % | 58.0 | 59.3 | 59.4 | 56.5 | 23.9 | 45.6 |
| | | 50mm | % | 59.8 | 69.2 | 66.3 | 66.4 | 28.4 | 42.9 |

| Item | Standard | Others/details |
|---|---|---|
| Core density | JIS K 7222 | Measured in core portion from which skin layer has been removed |
| 25% Hardness | JIS K 6400-2, Method D | 400×400×100 |
| Hysteresis loss | JIS K 6400-2, Method E | 200Φ, 50mm/min |
| Deflection coefficient | JIS K 6400-2, Method E | Value obtained by dividing 65% compression load by 25% compression load. Compression deflection coefficient |
| Stress relaxation | JIS K 6400-2 | Load of 196 N, 5 min |
| Damping test | JASO B408 | Iron plate, load of 50 kg, drop height of 20 mm |

Although the embodiments of the present invention have been described in detail above, the present invention is not limited to the above embodiments at all, and various modifications can be made without departing from the scope of the claims.

The seat pad according to the present invention can be used as a seat pad for seats of automobiles, aircraft, and railway vehicles, a sofa, a mattress, and cushioning materials therefor.

**Claims**

1. A seat pad comprising a polyurethane foam,

   the polyurethane foam having
   a deflection coefficient of 2.8 or less, measured according to the method defined in the description, and
   a displacement rate represented by the following equation (1) of 30% or more:

   $$\text{displacement rate} = t_1 \times 100/t_0 \dots \quad (1)$$

   where
   $t_0$ is a thickness of a flat plate sample cut out from the polyurethane foam, and
   $t_1$ is a maximum value of a displacement amount (sinking amount) of an iron plate when a damping characteristic is measured in accordance with JASO B408 using the flat plate sample,
   the polyurethane foam being obtained by reacting a raw material mixture comprising a polyol component and a polyisocyanate component,
   the polyol component comprising one or more polyether polyols A having

   (a) an EO content rate of 50 mol% or more,
   (b) a number of functional groups of 2.0 or more and 3.0 or less, and
   (c) a weight average molecular weight of more than 3500, and

   one or more polyether polyols B having

   (a) an EO content rate of 30 mol% or less, and
   (b) an average number of functional groups of 2.0 or more, and

   the polyisocyanate component comprising carbodiimide-modified MDI,
   wherein a content of the carbodiimide-modified MDI is 50 mass% or more, and
   the "content of the carbodiimide-modified MDI" refers to a proportion of the mass of the carbodiimide-modified MDI to the total mass of the polyisocyanate component.

2. The seat pad according to claim 1, wherein the displacement rate when $t_0$ = 50 mm is 45% or more.

3. The seat pad according to claim 1, wherein the displacement rate when $t_0$ = 100 mm is 50% or more.

4. The seat pad according to claim 1, wherein the raw material mixture further comprises a crosslinking agent having a number of functional groups of 3 or more to 6 or less and a molecular weight of 60 or more to 1000 or less.

**Patentansprüche**

1. Sitzpolster mit einem Polyurethanschaumstoff, der

   einen Verformungskoeffizienten von 2,8 oder weniger, der gemäß dem in der Beschreibung definierten Verfahren gemessen wird, und
   eine Verformungsrate, die durch die folgende Gleichung (1) dargestellt wird, von 30 % oder mehr aufweist:

$$\text{Verformungsrate} = t_1 \times 100/t_0 \qquad \dots (1)$$

   bei der
   $t_0$ eine Dicke einer flachen Plattenprobe ist, die aus dem Polyurethanschaumstoff ausgeschnitten wird, und
   $t_1$ ein Maximalwert eines Versatzausmaßes (Einsinkausmaßes) einer Eisenplatte ist, wenn eine Dämpfungskennlinie gemäß JASO B408 unter Verwendung der flachen Plattenprobe gemessen wird,
   welcher Polyurethanschaumstoff durch Reagieren einer Rohmaterialmischung mit einer Polyol-Komponente und einer Polyisocyanat-Komponente erhalten wird,
   welche Polyol-Komponente ein oder mehrere Polyether-Polyole A mit

   (a) einem EO-Gehalt von 50 Mol% oder mehr,
   (b) einer Anzahl funktionaler Gruppen von 2,0 oder mehr und 3,0 oder weniger, und
   (c) einem gewichtsmittleren Molekulargewicht von mehr als 3500, und

   ein oder mehrere Polyether-Polyole B mit

   (a) einem EO-Gehalt von 30 Mol% oder weniger, und
   (b) einer mittleren Anzahl funktionaler Gruppen von 2,0 oder mehr aufweist, und

   welche Polyisocyanat-Komponente Carbodiimid-modifiziertes MDI aufweist,
   bei dem ein Gehalt des Carbodiimid-modifizierten MDI 50 Masse% oder mehr beträgt, und der "Gehalt des Carbodiimid-modifizierten MDI" einen Anteil der Masse des Carbodiimid-modifizierten MDI an der Gesamtmasse der Polyisocyanat-Komponente bezeichnet.

2. Sitzpolster nach Anspruch 1, bei dem die Verformungsrate, wenn $t_0$ = 50 mm, 45% oder mehr beträgt.

3. Sitzpolster nach Anspruch 1, bei dem die Verformungsrate, wenn $t_0$ = 100 mm, 50 % oder mehr beträgt.

4. Sitzpolster nach Anspruch 1, bei dem die Rohmaterialmischung ferner ein Vernetzungsmittel mit einer Anzahl funktionaler Gruppen von 3 oder mehr bis 6 oder weniger und einem Molekulargewicht von 60 oder mehr und 1000 oder weniger aufweist.

**Revendications**

1. Rembourrage de siège comprenant une mousse de polyuréthane,

   la mousse de polyuréthane présentant
   un coefficient de déformation inférieur ou égal à 2,8, mesuré selon le procédé défini dans la description, et
   une vitesse de déplacement représenté par l'équation (1) suivante de 30 % ou plus :

$$\text{vitesse de déplacement} = t_1 \times 100/t_0 \ \dots \ (1)$$

   avec
   $t_0$ est une épaisseur d'un échantillon de plaque plate découpé à partir de la mousse de polyuréthane, et
   $t_1$ est la valeur maximale d'une quantité de déplacement (quantité d'enfoncement) d'une plaque en fer lorsque la caractéristique d'atténuation est mesurée conformément à la norme JASO B408 à l'aide de l'échantillon de plaque plate,

la mousse de polyuréthane étant obtenue par réaction d'un mélange de matières premières comprenant un composant polyol et un composant polyisocyanate,

le composant polyol comprenant un ou plusieurs polyéther-polyols A ayant

a) une teneur en EO de 50 % en moles ou plus,
b) un nombre de groupes fonctionnels de 2,0 ou plus et 3,0 ou moins et
c) un poids moléculaire moyen en poids supérieur à 3 500, et

un ou plusieurs polyéther-polyols B ayant

a) une teneur en EO de 30 % en moles ou moins, et
b) un nombre moyen de groupes fonctionnels de 2,0 ou plus, et

le composant polyisocyanate comprenant du MDI modifié par du carbodiimide,

dans lequel la teneur en MDI modifié par du carbodiimide est de 50 % en masse ou plus, et

la « teneur en MDI modifié par du carbodiimide » désigne la proportion de la masse du MDI modifié par du carbodiimide par rapport à la masse totale du composant polyisocyanate.

2. Rembourrage de siège selon la revendication 1, dans lequel la vitesse de déplacement lorsque $t_0 = 50$ mm est de 45 % ou plus.

3. Rembourrage de siège selon la revendication 1, dans lequel la vitesse de déplacement lorsque $t_0 = 100$ mm est de 50 % ou plus.

4. Rembourrage de siège selon la revendication 1, dans lequel le mélange de matières premières comprend en outre un agent de réticulation ayant un nombre de groupes fonctionnels de 3 ou plus à 6 ou moins et un poids moléculaire de 60 ou plus à 1 000 ou moins.

FIG. 1

<Damping test>

IRON PLATE (50kg)

DROP HEIGHT(20mm)

*THE IRON PLATE IS FREELY DROPPED ON THE SAMPLE, AND THE DAMPING CHARACTERISTIC IS
EVALUATED FROM THE AMOUNT OF BOUNCING (DISPLACEMENT) OF THE IRON PLATE
DURING DROPPING AND THE TIME UNTIL THE IRON PLATE STANDS STILL.

FIG. 2

EP 4 555 902 B1

FIG. 3

FIG. 4

DAMPING TEST (THICKNESS: 50 mm)

**EP 4 555 902 B1**

REFERENCES CITED IN THE DESCRIPTION

**Patent documents cited in the description**

- JP 2003119240 A
- JP 2005177171 A
- JP 2019194321 A
- JP 2020094980 A
- JP 2002102008 A
- US 6919384 B2
- US 7790778 B2